# DEMANDE DE BREVET EUROPEEN

(11) **EP 1 375 221 A1**
(43) Date de publication de la demande: **02.01.2004**
(21) Numéro de dépôt: 03364010.3
(22) Date de dépôt: 23.06.2003
(51) Int. Cl.: B60J 1/20, B60J 7/00

(54) **Store à enrouleur à entraînement par câble pour véhicule automobile**

(30) Priorité: 25.06.2002 FR 0207886
(71) Demandeur: WAGON AUTOMOTIVE SNC, 79302 Bressuire Cédex (FR)
(72) Inventeur: Jolivet, David, 79300 Bressuire (FR)
(74) Mandataire: Vidon, Patrice

(57) **Abrégé**

L'invention concerne un store à enrouleur pour véhicule automobile, comprenant une toile d'occultation(12) dont une première extrémité est solidaire d'un tube enrouleur et une seconde extrémité est solidaire d'une barre de tirage(13), comprenant au moins un câble d'actionnement monté dans une gaine(16₁,16₂) et relié à ladite barre de tirage(13) et actionné par des moyens d'entraînement(17,18) pour assurer le déploiement et/ou le repliement de ladite toile d'occultation(12).

## Description

Le domaine de l'invention est celui de l'équipement des véhicules automobiles. Plus précisément, l'invention concerne les stores à enrouleur, et en particulier l'automatisation de tels stores à enrouleur.

On équipe souvent les véhicules automobiles de stores à enrouleur, notamment pour les vitres latérales ou les vitres de lunettes arrière. Ces stores sont généralement formés par une toile d'occultation montée sur un tube enrouleur, mobile en rotation sur des paliers. Des moyens de rappel, logés par exemple à l'intérieur du tube, agissant sur celui-ci de façon à ramener la toile d'occultation autour du tube.

Une première extrémité de la toile est donc solidaire du tube enrouleur. L'autre extrémité de cette toile est équipée d'une barre de tirage, qu'un utilisateur peut saisir pour déployer la toile. L'utilisateur agit ainsi sur la barre de tirage (éventuellement par l'intermédiaire des moyens de préhension) en luttant contre la force de rappel du ressort, jusqu'à déployer complètement la toile, puis fixe la barre de tirage à des moyens d'accrochage prévus à cet effet.

Le repliement de la toile est assuré par les moyens de rappel.

On a déjà proposé d'automatiser ces stores à enrouleur, notamment pour les vitres de lunettes arrière. Pour cela, on a développé des mécanismes dits en anglais « push-pull » (pousser-tirer) : des moyens d'actionnement, tels que des bras, des biellettes ou des compas, sont montés sur le véhicule (ou sur un élément solidaire du véhicule) et agissent sur la barre de tirage. Ces moyens d'actionnement sont entraînés par des moyens de motorisation, pour assurer le déploiement et le repliement de la toile.

Ces stores motorisés s'avèrent relativement efficaces. Cependant, ils présentent certains inconvénients. Ils sont relativement complexes, mécaniquement, et nécessitent des réglages précis (notamment pour que la barre de tirage reste parallèle lors de ses déplacements). Ils sont également encombrants, et en conséquence peu aisés à dissimuler lorsque le store est replié.

Un autre inconvénient est que les coûts de ces stores sont élevés, et peu aisés à construire et à monter.

Par ailleurs, pour faciliter le déploiement et le repliement de la toile, les constructeurs sont généralement conduits à équiper la barre de tirage de roulettes qui viennent rouler le long de la vitre. Ces roulettes complexifient encore les stores, et rendent difficile le rangement du store en position repliée. Cet aspect augmente les coûts de fabrication et de montage.

L'invention a notamment pour objectif de pallier ces différents inconvénients de l'état de la technique.

Plus précisément, un objectif de l'invention est de fournir un store à enrouleur motorisé pour véhicule automobile qui soit simple à réaliser, à monter et à mettre en oeuvre.

Notamment, un objectif de l'invention est de fournir un tel store motorisé ne nécessitant pas de mécanismes de type « push-pull », complexes et encombrants.

Un autre objectif de l'invention est de fournir un tel store motorisé qui puisse aisément être adapté d'un store manuel, de façon par exemple à simplifier la construction et le montage, et/ou à rendre interchangeables un store manuel et un store motorisé.

Un objectif de l'invention est également de fournir un tel store motorisé, qui soit peu coûteux à réaliser, à mettre en place et à régler.

Ces objectifs, ainsi que d'autres qui apparaîtront par la suite, sont atteints à l'aide d'un store à enrouleur pour véhicule automobile, comprenant une toile d'occultation dont une première extrémité est solidaire d'un tube enrouleur et une seconde extrémité est solidaire d'une barre de tirage. Selon l'invention, le store comprend au moins un câble d'actionnement monté dans une gaine et relié à ladite barre de tirage et actionné par des moyens d'entraînement pour assurer le déploiement et/ou le repliement de ladite toile d'occultation.

On obtient ainsi un store à enrouleur particulièrement simple et efficace, réalisable par exemple à partir d'un store manuel, par l'ajout de câbles et de moyens d'entraînement. La présence des câbles permet par ailleurs de déporter aisément ces moyens d'entraînement vers un emplacement adéquat.

Les gaines facilitent la mise en place : il n'est pas nécessaire de prévoir de moyens de guidage et/ou de tension spécifiques. Elles offrent en outre une bonne tolérance aux jeux éventuels, existant sur le véhicule dès l'origine et/ou pouvant apparaître au cours du temps.

De façon préférentielle, le store à enrouleur de l'invention comprend deux câbles reliés respectivement à chacune des extrémités de ladite barre de tirage.

Avantageusement, ou lesdits câbles assurent le déploiement de ladite toile d'occultation. Ils remplacent ainsi le mouvement manuel de déploiement, et assurent en outre le maintien du store en position déployée.

Ledit tube enrouleur est quant à lui préférentiellement muni de moyens de rappel, classiques en soi, et tendant à assurer l'enroulement de ladite toile autour dudit tube enrouleur.

Selon un mode de réalisation avantageux de l'invention, chacun desdits câbles est relié à ladite barre de tirage par l'intermédiaire d'un embout monté sur cette dernière.

La réalisation du store est ainsi très simple, à partir d'un store manuel. Le ou lesdits embouts assurent avantageusement une fonction de guidage, par exemple en portant un patin configuré pour coopérer avec un rail de guidage s'étendant parallèlement à la direction de déploiement de ladite toile d'occultation.

De façon avantageuse, au moins un desdits embouts peut coulisser à l'intérieur ou parallèlement à ladite barre de tirage, de façon à permettre le déploiement et le repliement d'une toile d'occultation trapézoïdale.

Préférentiellement, lesdits moyens d'entraînement comprennent un motoréducteur agissant sur un enrouleur de câble(s).

Selon un premier mode de mise en oeuvre, lesdits moyens d'entraînement peuvent être situés à proximité de la barre de tirage, lorsque ladite toile d'occultation est déployée. Ils peuvent ainsi être logés, par exemple, sous le pavillon du véhicule.

Selon un second mode de réalisation, lesdits moyens d'entraînement sont déportés. Dans ce cas, des moyens de renvoi sont prévus pour amener ledit câble dans la position souhaitée. Ces moyens de renvoi comprennent notamment une gaine, et le cas échéant des moyens de guidage de celle-ci.

Il est ainsi possible de loger les moyens d'entraînement par exemple sous une tablette arrière, et/ou d'associer les moyens d'entraînement au boîtier du store (ou encore de les loger dans ce boîtier).

L'invention concerne également les véhicules automobiles comprenant au moins un store à enrouleur motorisé tel que décrit ci-dessus.

Dans un tel véhicule, le store à enrouleur peut notamment être destiné à occulter une vitre de lunette arrière. Dans ce cas, lesdits moyens d'entraînement peuvent en particulier être logés sous le pavillon ou sous la tablette arrière dudit véhicule.

Un tel store peut également équiper une vitre latérale.

D'autres caractéristiques et avantages de l'invention apparaîtront plus clairement à la lecture de la description suivante d'un mode de réalisation préférentiel donné à titre de simple exemple illustratif et non limitatif, et des dessins annexés, parmi lesquels :
- la figure 1 illustre un mode de réalisation préférentiel de l'invention, le store à enrouleur étant dans sa position déployée ;
- la figure 2 présente le store à enrouleur de la figure 1, dans une position pratiquement repliée ;
- la figure 3 présente une variante de montage du store à enrouleur des figures 1 et 2, selon laquelle les moyens de motorisation sont déportés.

Selon un aspect avantageux de l'invention, le store motorisé peut être réalisé à partir d'un store manuel classique. Il peut bien sûr également être réalisé de façon spécifique, si nécessaire.

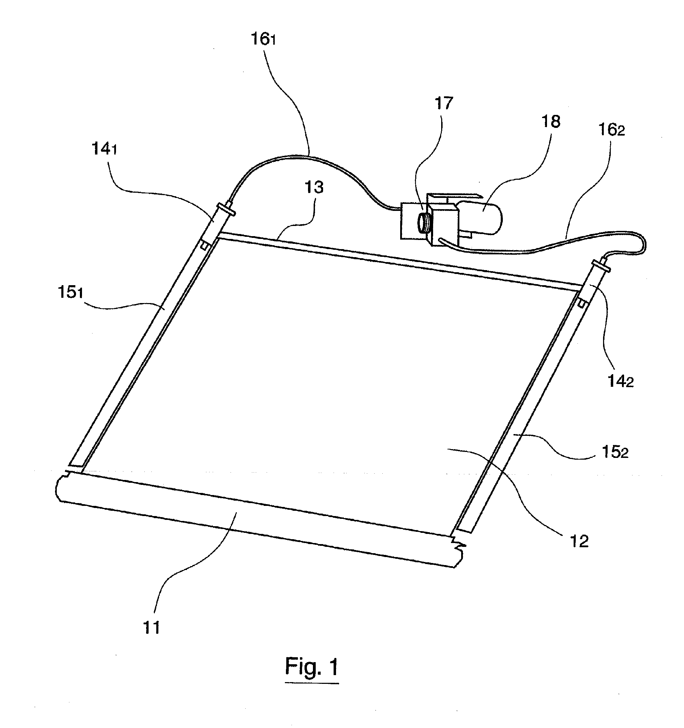

La figure 1 illustre un tel store, destiné par exemple à occulter une vitre de lunette arrière. Il est donc réalisé à partir d'un store manuel, dont le tube enrouleur (non représenté) est monté dans un boîtier 11.

Il comprend une toile d'occultation 12, dont l'extrémité libre est munie d'une barre de tirage 13. Le tube enrouleur est équipé de moyens de rappel (classiquement un ressort dont une extrémité est solidaire du tube et l'autre du boîtier) tendant à ramener la toile 12 dans sa position repliée, c'est-à-dire enroulée autour du tube enrouleur.

Ces différents aspects sont connus en soi.

Selon l'invention, on rapporte à chacune des extrémités de la barre de tirage 13 des embouts 14₁, 14₂ qui ont une double fonction de :
- liaison de la barre de tirage avec les câbles d'actionnement ;
- guidage de la barre de tirage, le long des rails 15₁, 15₂ prévus à cet effet.

Pour cela, l'embout comprend un patin, ou une ou plusieurs roulettes, assurant le guidage et/ou le maintien dans ledit rail.

Dans le cas où la toile 12 est trapézoïdale, ou plus généralement d'une forme non rectangulaire, les rails ne sont pas parallèles. Il faut donc que la distance entre les deux patins des embouts soit variable. Cela peut être obtenu avantageusement en montant les embouts (ou au moins l'un d'entre eux, selon la forme de la toile) coulissant à l'intérieur ou le long de la barre de tirage 13. Ainsi, cette distance s'adapte automatiquement à l'écartement imposé par les rails.

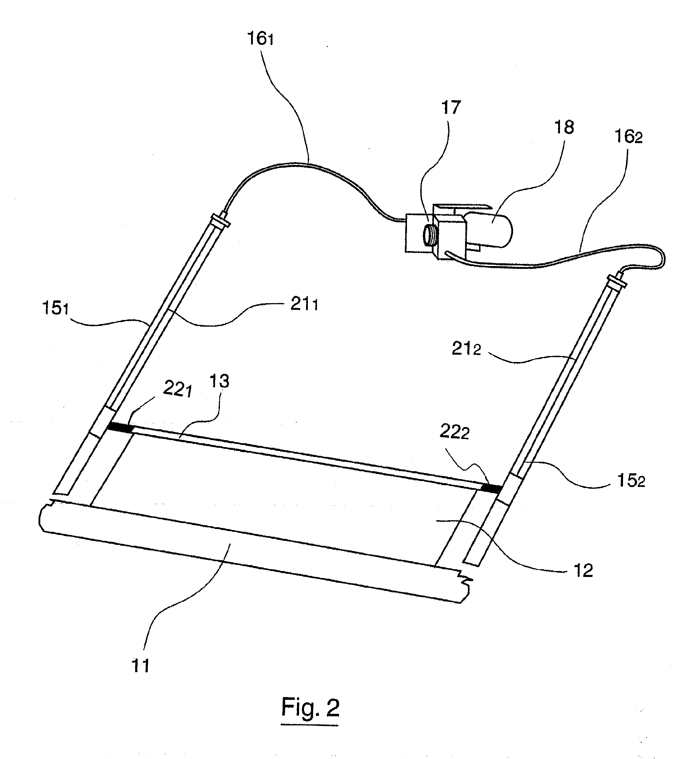

Ces portions coulissantes 22₁, 22₂ apparaissent sur la figure 2 (la toile étant plus large dans sa partie basse, solidaire du tube, que dans sa partie haute, solidaire de la barre de tirage).

Les câbles d'actionnement circulent dans des gaines 16₁, 16₂ qui s'étendent entre des butées 19₁, 19₂ et un enrouleur de câbles 17. La présence de ces gaines 16₁, 16₂ permet de configurer aisément le trajet des câbles, et donc de placer les moyens d'entraînement où cela est souhaitable. Ils facilitent également le mouvement de ces câbles.

Les moyens d'entraînement comprennent par exemple un moto-réducteur 18, qui actionne dans un sens et dans l'autre l'enrouleur de câbles 17.

Lorsque les câbles sont enroulés au maximum par l'enrouleur 17, on se trouve dans la position de la figure 1. Les patins des embouts 14₁, 14₂ sont arrivés en butées 19₁, 19₂, à l'extrémité des rails 15₁, 15₂, et la toile 12 est complètement déployée.

Il n'est pas nécessaire, comme pour un store manuel, d'accrocher la barre de tirage dans la position déployée. Le moto-réducteur 18 maintient l'enrouleur dans la position correspondante, jusqu'à ce que le repliement soit souhaité.

Le repliement s'obtient en déroulant les câbles 21₁, 21₂, ainsi que cela est illustré en figure 2. La toile 12 est entraînée par les moyens de rappel, la barre de tirage 13 étant maintenue par les câbles, via les embouts 14₁, 14₂.

On dispose ainsi d'une technique très simple et très efficace. Par rapport au store manuel, il a en effet suffit d'ajouter les embouts 14₁, 14₂, les rails dans lesquels ils circulent, les moyens d'entraînement et les câbles.

Les rails 15₁, 15₂ peuvent être rapportés sur la carrosserie du véhicule, ou prévus dès l'origine.

La mise en oeuvre de câbles, et de gaines de câbles, permet de placer le moto-réducteur et l'enrouleur en tout lieu adéquat. Cela est d'autant plus aisé que ces éléments présentent un encombrement relativement réduit. Dans le cas des figures 1 et 2, ils peuvent notamment être logés sous le pavillon.

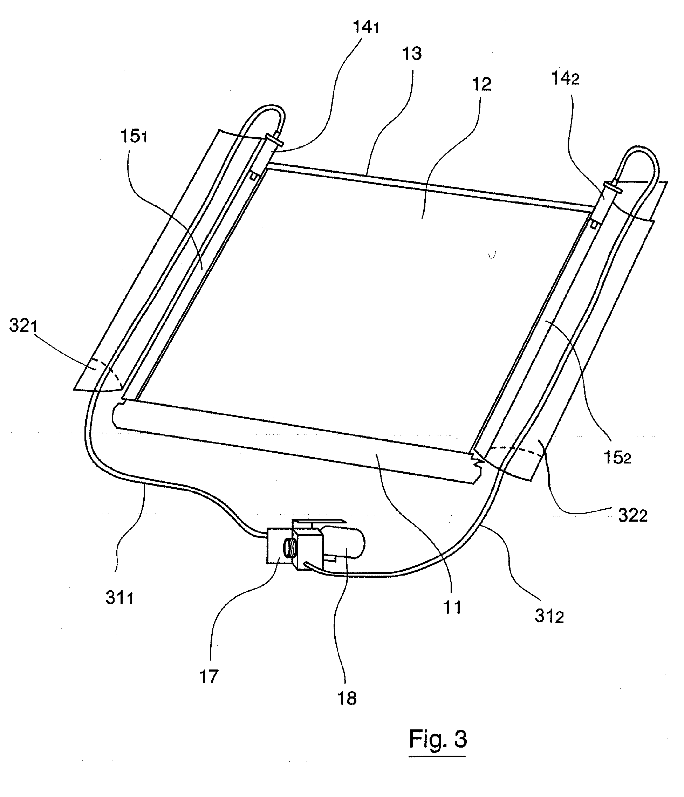

La figure 3 illustre une variante de mise en oeuvre, dans laquelle les moyens d'entraînement sont situés au voisinage du (ou dans le) boîtier du store, sous la tablette de lunette arrière.

Dans ce cas, des gaines 31₁, 31₂ de renvoi du câble sont prévus, par exemple dans la garniture32₁, 32₂ du véhicule, ou dans les rails 15₁, 15₂, pour ramener les câbles dans une position de travail similaire à cette discutée précédemment.

D'autres variantes de mise en oeuvre sont bien sûr envisageables. Notamment, les embouts ne sont pas obligatoires, et les câbles peuvent être solidarisés directement à la barre de tirage, par exemple via des lumières prévues à cet effet. Dans ce cas, la barre de tirage peut être munie de roulettes, ou de patins, pour assurer son guidage, lors du déploiement et du repliement, et/ou son appui sur la vitre en position déployée.

Dans certains cas particuliers, un seul câble peut être suffisant. Il peut agir sur la barre de tirage en position centrale, ou sur des côtés (l'autre côté étant alors configuré de façon que le déplacement de la barre de tirage reste efficace).

Par ailleurs, l'invention peut être mise en oeuvre non seulement pour les vitres arrières, mais également pour les vitres latérales, voire les toits ouvrants.

## Revendications

1. Store à enrouleur pour véhicule automobile, comprenant une toile d'occultation (12) dont une première extrémité est solidaire d'un tube enrouleur et une seconde extrémité est solidaire d'une barre de tirage (13),
**caractérisé en ce qu'**il comprend au moins un câble d'actionnement (21₁,21₂) monté dans une gaine (16₁,16₂) et relié à ladite barre de tirage (13) et actionné par des moyens d'entraînement (17,18) pour assurer le déploiement et/ou le repliement de ladite toile d'occultation (12).

2. Store à enrouleur selon la revendication 1, **caractérisé en ce qu'**il comprend deux câbles reliés (21₁,21₂) respectivement à chacune des extrémités de ladite barre de tirage.

3. Store à enrouleur selon l'une quelconque des revendications 1 et 2, **caractérisé en ce que** le ou lesdits câbles (21₁,21₂) assurent le déploiement de ladite toile d'occultation (12).

4. Store à enrouleur selon l'une quelconque des revendications 1 à 3, **caractérisé en ce que** ledit tube enrouleur est muni de moyens de rappel, tendant à assurer l'enroulement de ladite toile (12) autour dudit tube enrouleur.

5. Store à enrouleur selon l'une quelconque des revendications 1 à 4, **caractérisé en ce que** chacun desdits câbles (21₁,21₂) est relié à ladite barre de tirage (13) par l'intermédiaire d'un embout monté sur cette dernière.

6. Store à enrouleur selon la revendication 5, **caractérisé en ce que** le ou lesdits embouts (14₁,14₂) portent un patin configuré pour coopérer avec un rail de guidage (15₁,15₂) s'étendant parallèlement à la direction de déploiement de ladite toile d'occultation (12).

7. Store à enrouleur selon l'une quelconque des revendications 5 et 6, **caractérisé en ce qu'**au moins un desdits embouts (14₁,14₂) peut coulisser à l'intérieur ou parallèlement à ladite barre de tirage (13),
de façon à permettre le déploiement et le repliement d'une toile d'occultation trapézoïdale.

8. Store à enrouleur selon l'une quelconque des revendications 1 à 7,
**caractérisé en ce que** lesdits moyens d'entraînement comprennent un motoréducteur (18) agissant sur un enrouleur de câble(s) (17).

9. Store à enrouleur selon l'une quelconque des revendications 1 à 8, **caractérisé en ce que** lesdits moyens d'entraînement (17,18) sont situés à proximité de la barre de tirage (13), lorsque ladite toile d'occultation (12) est déployée.

10. Store à enrouleur selon l'une quelconque des revendications 1 à 8, **caractérisé en ce que** lesdits moyens d'entraînement (17,18) sont déportés, et **en ce que** des moyens de renvoi (31₁,31₂) sont prévus pour amener ledit câble (21₁,21₂) dans la position souhaitée.

11. Véhicule automobile **caractérisé en ce qu'**il comprend au moins un store à enrouleur selon l'une quelconque des revendications 1 à 10.

12. Véhicule automobile selon la revendication 11, **caractérisé en ce que** ledit store à enrouleur est destiné à occulter une vitre de lunette arrière, et **en ce que** lesdits moyens d'entraînement sont logés sous le pavillon ou sous la tablette arrière dudit véhicule.
